# EUROPEAN PATENT SPECIFICATION

(11) **EP 4 206 107 B1**
(45) Date of publication and mention of the grant of the patent: **13.08.2025**
(21) Application number: 22209724.8
(22) Date of filing: 25.11.2022
(51) Int. Cl.: B66B 13/22, B66B 5/00, B66B 13/16

(54) **COMPONENT MISALIGNMENT SENSING**
KOMPONENTENFEHLAUSRICHTUNGSMESSUNG
DÉTECTION DE DÉFAUT D'ALIGNEMENT DE COMPOSANTS

(30) Priority: 29.12.2021 US 202163294685 P
(43) Date of publication of application: 05.07.2023
(73) Proprietor: Otis Elevator Company, Farmington, Connecticut 06032 (US)
(72) Inventor: CRUTE, Joseph, Farmington, 06032 (US)
(74) Representative: Dehns

(56) References cited:
- EP-A1- 3 599 207
- EP-A1- 3 929 137
- CN-A- 113 844 992
- US-A1- 2021 047 147

## Description

### BACKGROUND

The embodiments herein relate to the field of conveyance systems, and specifically to a method and apparatus for monitoring misalignment of components of conveyance systems.

Precise positioning of components within a conveyance system, such as, for example, elevator systems, escalator systems, and moving walkways, plays and important role in the optimal operation of the conveyances system and may be difficult and/or costly to determine.

CN 113 844 992 A discloses a device including a detector that is configured to detect at least one reference feature in a vicinity of a desired position of the elevator door component. A processor is configured to use information from the detector to determine the desired position of the elevator door component relative to the at least one detected feature. An indicator is configured to provide at least one indication corresponding to the desired position of the elevator door component.

### BRIEF SUMMARY

According to an aspect of the invention, a method of monitoring an alignment of a component of a conveyance system according to claim 1 is provided. The method including: capturing, using a camera system, a follow-on image of the component of the conveyance system; determining a follow-on location of the component using photogrammetric measurements of the follow-on image; comparing the follow-on location to a baseline location of the component; and determining whether the component has shifted away from the baseline location based on the follow-on location and the baseline location.

Further embodiments may include: capturing, using the camera system, a baseline image of the component of the conveyance system; and determining the baseline location of the component using photogrammetric measurements of the baseline image.

Further embodiments may include determining whether a shift away from the baseline location is greater than an acceptable variance amount which indicates that an angular misalignment or a linear misalignment of the component is outside of an acceptable range.

Further embodiments may include activating an alert on a computing device when the angular misalignment or the linear misalignment of the component is outside of the acceptable range.

Further embodiments may include creating a new maintenance event on a calendar when the angular misalignment or the linear misalignment of the component is outside of the acceptable range.

Further embodiments may include moving a previously scheduled maintenance event on a calendar when the angular misalignment or the linear misalignment of the component is outside of the acceptable range.

Further embodiments may include that the conveyance system is an elevator system.

Further embodiments may include that the component is a door lock component of a door lock for a hoistway door of the elevator system.

Further embodiments may include that the camera system further includes: a first camera at a first location relative to the door lock; and a second camera at a second location relative to the door lock.

Further embodiments may include that the first camera is located above the door lock looking down onto the door lock, and wherein the second camera is located on a side of the door lock looking axially down the door lock.

According to another aspect of the invention, a component alignment monitoring system for monitoring an alignment of a component of a conveyance system according to claim 11 is provided. The component alignment monitoring system including: a camera system; a controller for the camera system, the controller including: a processor; and a memory including computer-executable instructions that, when executed by the processor, cause the processor to perform operations, the operations including: determining a follow-on location of the component using photogrammetric measurements of a follow-on image captured by the camera system; comparing the follow-on location to a baseline location of the component; and determining whether the component has shifted away from the baseline location based on the follow-on location and the baseline location.

Further embodiments may include that the operations further include: determining the baseline location of the component using photogrammetric measurements of a baseline image captured by the camera system.

Further embodiments may include that the operations further include: determining whether a shift away from the baseline location is greater than an acceptable variance amount which indicates that an angular misalignment or a linear misalignment of the component is outside of an acceptable range.

Further embodiments may include that the operations further include: activating an alert on a computing device when the angular misalignment or the linear misalignment of the component is outside of the acceptable range.

Further embodiments may include that the operations further include: creating a new maintenance event on a calendar when the angular misalignment or the linear misalignment of the component is outside of the acceptable range.

Further embodiments may include that the operations further include: moving a previously scheduled maintenance event on a calendar when the angular misalignment or the linear misalignment of the component is outside of the acceptable range.

Further embodiments may include that the conveyance system is an elevator system.

Further embodiments may include that the component is a door lock component of a door lock for a hoistway door of the elevator system.

Further embodiments may include that the camera system further includes: a first camera at a first location relative to the door lock; and a second camera at a second location relative to the door lock.

According to another aspect of the invention, a computer program product tangibly embodied on a non-transitory computer readable medium according to claim 15 is provided. The computer program product including instructions that, when executed by a processor, cause the processor to perform operations including: determining a follow-on location of the component using photogrammetric measurements of a follow-on image captured by a camera system; comparing the follow-on location to a baseline location of the component; and determining whether the component has shifted away from the baseline location based on the follow-on location and the baseline location.

Technical effects of embodiments of the present disclosure include monitoring the alignment of components within a conveyance apparatus using one or more cameras and photogrammetric measurements.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 is a schematic illustration of a component alignment monitoring system for the elevator system of FIG. 1, in accordance with an embodiment of the disclosure;
FIG. 3A is a schematic illustration of a door lock in an aligned state, in accordance with an embodiment of the disclosure;
FIG. 3B is a schematic illustration of a door lock in a misaligned state, in accordance with an embodiment of the disclosure; and
FIG. 4 is a flow chart of a method of of monitoring an alignment of a component of a conveyance system, in accordance with an embodiment of the disclosure.

### DETAILED DESCRIPTION

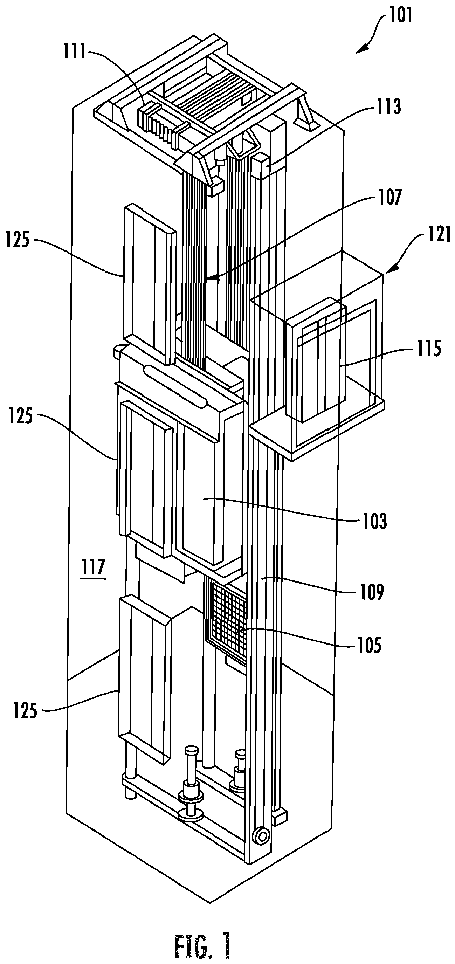

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor or pinched wheel propulsion to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

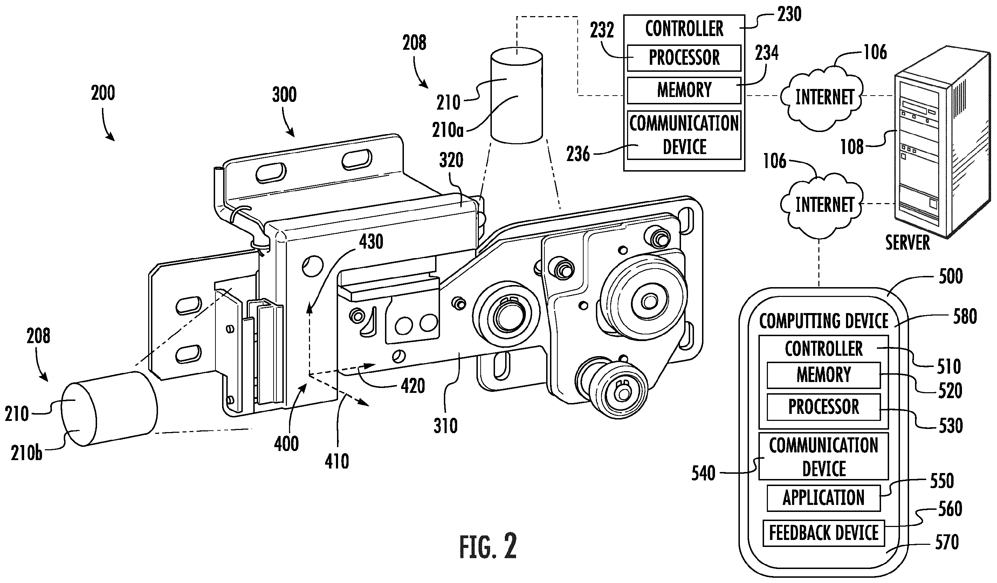

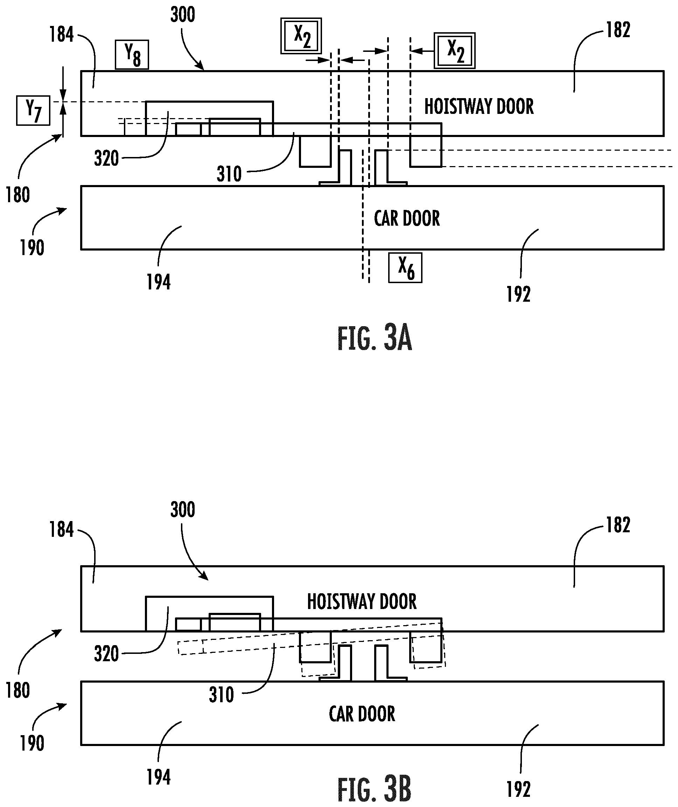

Referring now to FIGS. 2, 3A, and 3B, with continued referenced to FIG. 1, a prospective view of a component alignment monitoring system 200 is illustrated in FIG. 2 and door lock 300 is illustrated in FIGS. 3A and 3B, according to an embodiment of the present disclosure. FIG. 3A illustrates the door lock 300 in an aligned state and FIG. 3B illustrates the door lock 300 in a misaligned state. It should be appreciated that, although particular systems are separately defined in the schematic block diagrams, each or any of the systems may be otherwise combined or separated via hardware and/or software.

The component alignment monitoring system 200 includes a camera system 208 that includes including one or more cameras 210. The one or more cameras 210 of the component alignment monitoring system 200 may be operably arranged and located in order to monitor an alignment of components of the elevator system 101 and detect a miss-alignment of the components of the elevator system 101. In an embodiment, the components are door lock components of a door lock 300 of the elevator system 101. It is understood that while the component alignment monitoring system 200 is illustrated and described herein as being capable of detecting misalignment of a door lock 300, the embodiments described herein may be applicable to the component alignment monitoring system 200 being capable of detecting misalignment of any component of the elevator system 101, any component of any conveyance system, or any component of any other mechanical system.

FIG. 3A illustrates a top down view of the door lock 300. It is understood that the door lock 300 illustrated in FIGS. 2, 3A, and 3B is an exemplary door lock and the embodiments disclosed herein may be applicable to any door lock or any component of an elevator system 101. The door lock 300 comprises a first arm 310 and a second arm 320 that interlocks with the first arm 310. The first arm 310 may be referred to as a first component and the second arm 320 may be referred to as a second component. The door lock 300 is configured to ensure that the hoistway door 180 opens and closes properly during operation of the elevator system 101. The hoistway door 180 may be composed of a first hoistway door 182 and a second hoistway door 184. The hoistway door 180 is located on a landing 125 of the elevator system 101. The hoistway door 180 is in a facing spaced relationship with an elevator car door 190 of the elevator car 103. The elevator car door 190 is located on the elevator car 103 of the elevator system 101. The elevator car door 190 may be composed of a first elevator car door 192 and a second elevator car door 194. The elevator car door 190 and the hoistway door 180 may open simultaneously or near simultaneously to allow a passenger to enter the elevator car 103 at the landing 125.

The component alignment monitoring system 200 may include a first camera 210a and a second camera 210b, although only one camera 210 may be required as discussed further herein. The first camera 210a may be located above the door lock 300 looking down onto the door lock 300 at a first location. The second camera 210b may be located on a side of the door lock 300 looking axially down the first arm 310 and/or the second arm 320 of the door lock 300 at a second location. The second camera 210b may be oriented at about a right angle relative to the first camera 210a. The first location and second locations provide different perspectives for the first camera 210a and the second camera 210b to monitor the door lock 300.

In an embodiment, one camera 210 may be utilized in place of two or more cameras 210. In one example, the single camera 210 may be movable to capture multiple views/angles of the component, such as, for example, moving the camera between the first location to the second location. In another example, the camera 210 may utilize one or more mirrors to capture multiples views/angles of the component, such as, for example a view from the first location and/or a view from the second location.

The term "camera 210" is utilized herein to refer to both the first camera 210a and the second camera 210 collectively, while the terms "first camera 210a" and "second camera 210b" are used to refer individually to the first camera 210a at the first location and the second camera 210b at the second location.

The camera 210 may be any type of camera. The camera may be a still image camera or a compared video camera. The camera 210 may be configured to take still photos (i.e., follow-on images) at selected time intervals. The follow-on images may be compared to baseline images in order to determine whether there are any alignment issues in the door lock 300 using comparative analysis and/or photogrammetric measurements to determine magnitude of change.

The camera 210 may include or be operably connected to a controller 230. The controller 230 may be an electronic controller including a processor 232 and an associated memory 234 comprising computer-executable instructions (i.e., computer program product) that, when executed by the processor 232, cause the processor 232 to perform various operations. The processor 232 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 234 may be but is not limited to a random access memory (RAM), read only memory (ROM), or other electronic, optical, magnetic or any other computer readable medium. The first camera 210a and the second camera 210b may each have a dedicated controller 230 or they may share a single controller 230.

The controller 230 may include a computer program product or software saved on the memory 234 that is capable of performing photogrammetric measurements on images captured by the camera 210. Photogrammetry has the advantage of being capable of sub-millimeter measurements based on pixel density in short distances from a camera to an object. The software capable of performing photogrammetric measurements may include but is not limited to simultaneous localization and mapping (SLAM) software. Alternatively, the remote server 108 may include the computer program product or software saved that is capable of performing photogrammetric measurements on images captured by the camera 210. Thus, analysis and comparison of the images captured by the camera 210 may be performed locally by the controller 230 and/or remotely by the remote server 108, or any desired component in between.

The component alignment monitoring system 200 may first capture a baseline image of the door lock 300. The baseline image of the door lock 300 may be captured when the door lock 300 is first installed, when the component alignment monitoring system 200 is first installed, when the door lock 300 is realigned, when maintenance is performed on the door lock 300, or at any other time a baseline image is desired.

The baseline image establishes a baseline location for each component of the door lock 300 within the baseline image. The baseline location may be established in a cartesian coordinate system 400 including one or more axis, such as, for example an x-axis 410, a y-axis 420, and a z-axis 430. The z-axis 430 may be oriented parallel with a direction of travel of the elevator car 103 through the elevator shaft 117 or any other desired system.

A follow-on image may be captured by the camera 210 after the baseline image. The baseline image establishes a follow-on location for each component of the door lock 300 within the follow-on image. The follow-on location may be established in a cartesian coordinate system 400 including one or more axis, such as, for example an x-axis 410, a y-axis 420, and a z-axis 430. The follow-on location may be compared to the baseline location to determine if any component of the door lock 300 (i.e., door lock component) has shifted from the baseline location. A shift away from the baseline location greater than an acceptable variance amount may indicate that an angular or linear misalignment of the door lock component is outside of an acceptable range, which may then automatically trigger an alert on a computing device 500, add a new maintenance event on a calendar, or move a previously scheduled maintenance event to an earlier date on the calendar. An alert may be activated on a computing device 500 when a new maintenance event is created, or a previously scheduled maintenance event is moved to an earlier date on a calendar. The calendar may be stored on a remote server 108 and/or directly on the computing device 500.

The controller 230 also includes a communication device 236. The communication device 236 may be capable of wired and/or wireless communication including but not limited to Wi-Fi, Bluetooth, Zigbee, Sub-GHz RF Channel, cellular, or any other wireless signal known to one of skill in the art. The communication device 236 may be configured to communicate directly with a computing device 500. Alternatively, or additionally, the communication device 236 may be configured to communicate with the computing device 500 through the internet 106 and/or a remote server 108.

The computing device 500 may be a desktop computer, a laptop computer, or a mobile computing device that is typically carried by a person, such as, for example a phone, a smart phone, a PDA, a smart watch, a tablet, a laptop, or any other mobile computing device known to one of skill in the art.

The computing device 500 includes a controller 510 configured to control operations of the computing device 500. The controller 510 may be an electronic controller including a processor 530 and an associated memory 520 comprising computer-executable instructions (i.e., computer program product) that, when executed by the processor 530, cause the processor 530 to perform various operations. The processor 530 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 520 may be but is not limited to a random access memory (RAM), read only memory (ROM), or other electronic, optical, magnetic or any other computer readable medium.

The computing device 500 includes a communication device 540 configured to communicate with the internet 106 through one or more wireless signals. The one or more wireless signals may include Wi-Fi, Bluetooth, Zigbee, Sub-GHz RF Channel or any other wireless signal known to one of skill in the art. Alternatively, the computing device 500 may be connected to the internet 106 through a hardwired connection. The computing device 500 is configured to communicate with the component alignment monitoring system 200 through the internet 106. Communication between the computing device 500 and the component alignment monitoring system 200 may have to pass through the internet 106 and through the remote server 108.

The computing device 500 may include a display device 580, such as for example a computer display, an LCD display, an LED display, an OLED display, a touchscreen of a smart phone, tablet, or any other similar display device known to one of the skill in the art. A user operating the computing device 500 is able to view the computer application 550 through the display device 580.

The computing device 500 includes an input device 570 configured to receive a manual input from a user (e.g., human being) of computing device 500. The input device 570 may be a keyboard, a touch screen, a joystick, a knob, a touchpad, one or more physical buttons, a microphone configured to receive a voice command, a camera or sensor configured to receive a gesture command, an inertial measurement unit configured to detect a shake of the computing device 500, or any similar input device known to one of skill in the art. The user operating the computing device 500 is able to enter feedback into the computer application 550 through the input device 570. The input device 570 allows the user operating the computing device 500 to enter feedback into the computer application 550 via a manual input to input device 570. For example, the user may respond to a prompt on the display device 580 by entering a manual input via the input device 570. In one example, the manual input may be a touch on the touchscreen. In an embodiment, the display device 580 and the input device 570 may be combined into a single device, such as, for example, a touchscreen.

The computing device 500 device may also include a feedback device 560. The feedback device 560 may activate in response to a manual input via the input device 570. The feedback device 560 may be a haptic feedback vibration device and/or a speaker emitting a sound. The feedback device 560 device may activate to confirm that the manual input entered via the input device 570 was received via the computer application 550. For example, the feedback device 560 device may activate by emitting an audible sound or vibrate the computing device 500 to confirm that the manual input entered via the input device 570 was received via the computer application 550. The feedback device 560 may be activated when the alert on a computing device 500 is activated when it is detected that an angular or linear misalignment of the component is outside of an acceptable range, when a new maintenance event is added on the calendar, or when a previously scheduled maintenance event is moved to an earlier date on the calendar.

The component alignment monitoring system 200 may also include a power source 222. The power source 222 is configured to store and supply electrical power to the camera 210 and controller 230. The power source 222 may be electrical outlet and/or an energy storage system, such as, for example, a battery system, capacitor, or other energy storage system known to one of skill in the art. The power source 222 may also generate electrical power for the camera 210. The power source 222 may also include an energy generation or electricity harvesting system, such as, for example synchronous generator, induction generator, or other type of electrical generator known to one of skill in the art.

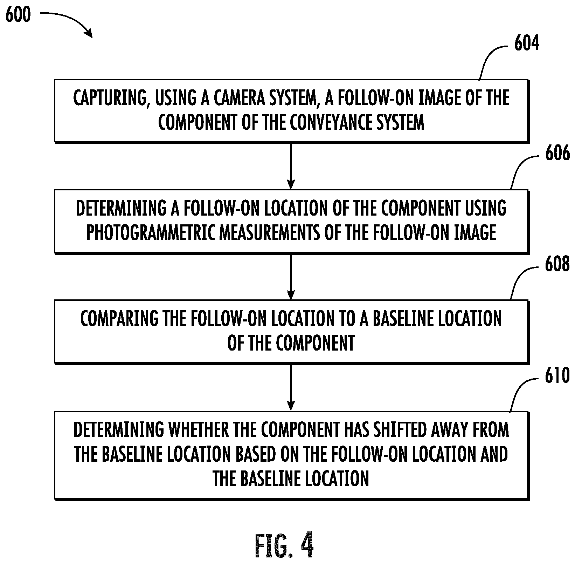

Referring now to FIG. 4, while referencing components of FIGS. 1, 2, 3A and 3B, a flow chart of a method 600 of monitoring an alignment of a component of a conveyance system, in accordance with an embodiment of the disclosure. In an embodiment, the method 600 may be performed by the component alignment monitoring system 200 using the controller 230 and/or the remote server 108 of FIG. 2. Also, in an embodiment, the component may be a component of the door lock 300 (i.e., a door lock component) of FIGS. 2 and 3 or more specifically the first arm 310 and/or the second arm 312 of the door lock 300. Further, in an embodiment, the conveyance system may be the elevator system 101 of FIG. 1.

At block 604, a camera system 208 captures a follow-on image of the component of the conveyance system. At block 606, a follow-on location of the component is determined using photogrammetric measurements of the follow-on image. The component alignment monitoring system 200 may also perform mapping that includes incudes 3D images as opposed to just pixel measurements. The mapping would create multiple images than can be mapped together to create a 3D visual of the component.

At block 608, the follow-on location is compared to a baseline location of the component.

At block 610, it is determined whether the component has shifted away from the baseline location based on the follow-on location and the baseline location.

Prior to block 604, the method 600 may further include that the camera system 208 captures a baseline image of the component of the conveyance system and determines the controller 230 may determine the baseline location of the component using photogrammetric measurements of the follow-on image.

The method 600 may further include that the controller 230 determines whether a shift away from the baseline location (in block 610) is greater than an acceptable variance amount which indicates that an angular misalignment or a linear misalignment of the component is outside of an acceptable range. The method 600 may further include that an alert is activated on a computing device 500 when the angular misalignment or the linear misalignment of the component is outside of the acceptable range.

In another embodiment, there may be multiple thresholds at which alerts may be triggered. In one embodiment, a first threshold of misalignment may trigger an error that is stored and reported, then a second threshold of misalignment triggers a more decisive action such as an alarm, shut down, or an increased priority alert to mechanic. The second threshold of misalignment is greater than the first threshold of misalignment.

The method 600 may further include that a new maintenance event is created on a calendar when the angular misalignment or the linear misalignment of the component is outside of the acceptable range. The method 600 may further include that a previously scheduled maintenance event is moved on a calendar when the angular misalignment or the linear misalignment of the component is outside of the acceptable range.

As aforementioned, the component of method 600 may be a door lock component of the door lock 300 of FIG. 3. The camera system 208 of method 600 may further include a first camera 210a at a first location relative to the door lock 300 and a second camera 210b at a second location relative to the door lock 300. The first camera 210a may be located above the door lock 300 looking down onto the door lock 300 and the second camera 210b may located on a side of the door lock looking axially down the door lock 300.

While the above description has described the flow process of FIG. 4 in a particular order, it should be appreciated that unless otherwise specifically required in the attached claims that the ordering of the steps may be varied.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the described embodiments may be modified while remaining within the scope of the invention as defined by the appended claims. Accordingly, the present invention is not to be seen as limited by the foregoing description, but is only limited by the scope of the appended claims.

## Claims

1. A method (600) of monitoring an alignment of a component of a conveyance system (101), the method comprising:
capturing (604), using a camera system (208), a follow-on image of the component of the conveyance system;
determining (606) a follow-on location of the component using photogrammetric measurements of the follow-on image;
**characterised by**:
comparing (608) the follow-on location to a baseline location of the component; and
determining (610) whether the component has shifted away from the baseline location based on the follow-on location and the baseline location.

2. The method (600) of claim 1, further comprising:
capturing, using the camera system (208), a baseline image of the component of the conveyance system (101); and
determining the baseline location of the component using photogrammetric measurements of the baseline image.

3. The method (600) of any preceding claim, further comprising:
determining whether a shift away from the baseline location is greater than an acceptable variance amount which indicates that an angular misalignment or a linear misalignment of the component is outside of an acceptable range.

4. The method (600) of claim 3, further comprising:
activating an alert on a computing device (500) when the angular misalignment or the linear misalignment of the component is outside of the acceptable range.

5. The method (600) of any of claims 3 or 4, further comprising:
creating a new maintenance event on a calendar when the angular misalignment or the linear misalignment of the component is outside of the acceptable range.

6. The method (600) of any of claims 3 to 5, further comprising:
moving a previously scheduled maintenance event on a calendar when the angular misalignment or the linear misalignment of the component is outside of the acceptable range.

7. The method (600) of any preceding claim, wherein the conveyance system is an elevator system (101).

8. The method (600) of claim 7, wherein the component is a door lock component of a door lock (300) for a hoistway door of the elevator system (101).

9. The method (600) of claim 8, wherein the camera system (208) further comprises:
a first camera (210a) at a first location relative to the door lock (300); and
a second camera (210b) at a second location relative to the door lock (300).

10. The method (600) of claim 9, wherein the first camera (210a) is located above the door lock (300) looking down onto the door lock (300), and wherein the second camera (210b) is located on a side of the door lock (300) looking axially down the door lock (300).

11. A component alignment monitoring system (200) for monitoring an alignment of a component of a conveyance system, the component alignment monitoring system comprising:
a camera system (208);
a controller (230) for the camera system (208), the controller (230) comprising:
a processor (232); and
a memory (234) comprising computer-executable instructions that, when executed by the processor, cause the processor to perform operations, the operations comprising:
determining a follow-on location of the component using photogrammetric measurements of a follow-on image captured using the camera system;
**characterised by**:
comparing the follow-on location to a baseline location of the component; and
determining whether the component has shifted away from the baseline location based on the follow-on location and the baseline location.

12. The component alignment monitoring system (200) of claim 11, wherein the operations further comprise:
determining the baseline location of the component using photogrammetric measurements of a baseline image captured by the camera system.

13. The component alignment monitoring system (200) of any of claims 11 to 12, wherein the operations further comprise:
determining whether a shift away from the baseline location is greater than an acceptable variance amount which indicates that an angular misalignment or a linear misalignment of the component is outside of an acceptable range; optionally wherein the operations further comprise:
activating an alert on a computing device (500) when the angular misalignment or the linear misalignment of the component is outside of the acceptable range; and/or wherein the operations further comprise:
creating a new maintenance event on a calendar when the angular misalignment or the linear misalignment of the component is outside of the acceptable range; and/or wherein the operations further comprise:
moving a previously scheduled maintenance event on a calendar when the angular misalignment or the linear misalignment of the component is outside of the acceptable range.

14. The component alignment monitoring system (200) of any of claims 11 to 13, wherein the conveyance system is an elevator system (101); optionally wherein the component is a door lock component of a door lock (300) for a hoistway door of the elevator system (101); and further optionally wherein the camera system further comprises:
a first camera (210a) at a first location relative to the door lock (300); and
a second camera (210b) at a second location relative to the door lock (300).

15. A computer program product tangibly embodied on a non-transitory computer readable medium, the computer program product including instructions that, when executed by a processor, cause the processor to perform operations comprising:
determining a follow-on location of the component using photogrammetric measurements of a follow-on image captured by a camera system;
**characterised by**:
comparing the follow-on location to a baseline location of the component; and
determining whether the component has shifted away from the baseline location based on the follow-on location and the baseline location.

## Patentansprüche

1. Verfahren (600) zum Überwachen einer Ausrichtung einer Komponente eines Fördersystems (101), wobei das Verfahren Folgendes umfasst:
Aufnehmen (604) eines Folgebildes der Komponente des Fördersystems unter Verwendung eines Kamerasystems (208);
Bestimmen (606) eines Folgestandorts der Komponente unter Verwendung fotogrammetrischer Messungen des Folgebildes;
**gekennzeichnet durch**:
Vergleichen (608) des Folgestandorts mit einem Ausgangsstandort der Komponente; und
Bestimmen (610), ob sich die Komponente von dem Ausgangsstandort weg verschoben hat, auf der Grundlage des Folgestandorts und des Ausgangsstandorts.

2. Verfahren (600) nach Anspruch 1, ferner umfassend:
Aufnehmen eines Ausgangsbildes der Komponente des Fördersystems (101) unter Verwendung des Kamerasystems (208); und
Bestimmen des Ausgangsstandorts der Komponente unter Verwendung fotogrammetrischer Messungen des Ausgangsbildes.

3. Verfahren (600) nach einem der vorhergehenden Ansprüche, ferner umfassend:
Bestimmen, ob eine Verschiebung weg von dem Ausgangsstandort größer ist als ein akzeptabler Abweichungsbetrag, der angibt, dass eine Winkelfehlausrichtung oder eine lineare Fehlausrichtung der Komponente außerhalb eines akzeptablen Bereichs liegt.

4. Verfahren (600) nach Anspruch 3, ferner umfassend:
Aktivieren einer Warnung auf einer Computervorrichtung (500), wenn die Winkelfehlausrichtung oder die lineare Fehlausrichtung der Komponente außerhalb des akzeptablen Bereichs liegt.

5. Verfahren (600) nach einem der Ansprüche 3 oder 4, ferner umfassend:
Erstellen eines neuen Wartungsereignisses in einem Kalender, wenn die Winkelfehlausrichtung oder die lineare Fehlausrichtung der Komponente außerhalb des akzeptablen Bereichs liegt.

6. Verfahren (600) nach einem der Ansprüche 3 bis 5, ferner umfassend:
Bewegen eines zuvor geplanten Wartungsereignisses in einem Kalender, wenn die Winkelfehlausrichtung oder die lineare Fehlausrichtung der Komponente außerhalb des akzeptablen Bereichs liegt.

7. Verfahren (600) nach einem der vorhergehenden Ansprüche, wobei das Fördersystem ein Aufzugssystem (101) ist.

8. Verfahren (600) nach Anspruch 7, wobei die Komponente eine Türverriegelungskomponente einer Türverriegelung (300) für eine Schachttür des Aufzugssystems (101) ist.

9. Verfahren (600) nach Anspruch 8, wobei das Kamerasystem (208) ferner Folgendes umfasst:
eine erste Kamera (210a) an einem ersten Standort relativ zu der Türverriegelung (300); und
eine zweite Kamera (210b) an einem zweiten Standort relativ zu der Türverriegelung (300).

10. Verfahren (600) nach Anspruch 9, wobei sich die erste Kamera (210a) über der Türverriegelung (300) befindet und nach unten auf die Türverriegelung (300) gerichtet ist und wobei sich die zweite Kamera (210b) auf einer Seite der Türverriegelung (300) befindet und axial nach unten auf die Türverriegelung (300) gerichtet ist.

11. System zum Überwachen einer Komponentenausrichtung (200) zum Überwachen einer Ausrichtung einer Komponente eines Fördersystems, wobei das System zum Überwachen einer Komponentenausrichtung Folgendes umfasst:
ein Kamerasystem (208);
eine Steuerung (230) für das Kamerasystem (208), wobei die Steuerung (230) Folgendes umfasst:
einen Prozessor (232); und
einen Speicher (234), der computerausführbare Anweisungen umfasst, die beim Ausführen durch den Prozessor den Prozessor zum Durchführen von Operationen veranlassen, wobei die Operationen Folgendes umfassen:
Bestimmen eines Folgestandorts der Komponente unter Verwendung fotogrammetrischer Messungen eines unter Verwendung des Kamerasystems aufgenommenen Folgebildes;
**gekennzeichnet durch**:
Vergleichen des Folgestandorts mit einem Ausgangsstandort der Komponente; und
Bestimmen, ob sich die Komponente von dem Ausgangsstandort weg verschoben hat, auf der Grundlage des Folgestandorts und des Ausgangsstandorts.

12. System zum Überwachen einer Komponentenausrichtung (200) nach Anspruch 11, wobei die Operationen ferner Folgendes umfassen:
Bestimmen des Ausgangsstandorts der Komponente unter Verwendung fotogrammetrischer Messungen eines durch das Kamerasystem aufgenommenen Ausgangsbildes.

13. System zum Überwachen einer Komponentenausrichtung (200) nach einem der Ansprüche 11 bis 12, wobei die Operationen ferner Folgendes umfassen:
Bestimmen, ob eine Verschiebung weg von dem Ausgangsstandort größer ist als ein akzeptabler Abweichungsbetrag, der angibt, dass eine Winkelfehlausrichtung oder eine lineare Fehlausrichtung der Komponente außerhalb eines akzeptablen Bereichs liegt, wobei die Operationen optional Folgendes umfassen:
Aktivieren einer Warnung auf einer Computervorrichtung (500), wenn die Winkelfehlausrichtung oder die lineare Fehlausrichtung der Komponente außerhalb des akzeptablen Bereichs liegt;
und/oder wobei die Operationen ferner Folgendes umfassen:
Erstellen eines neuen Wartungsereignisses in einem Kalender, wenn die Winkelfehlausrichtung oder die lineare Fehlausrichtung der Komponente außerhalb des akzeptablen Bereichs liegt;
und/oder wobei die Operationen ferner Folgendes umfassen:
Bewegen eines zuvor geplanten Wartungsereignisses in einem Kalender, wenn die Winkelfehlausrichtung oder die lineare Fehlausrichtung der Komponente außerhalb des akzeptablen Bereichs liegt.

14. System zum Überwachen einer Komponentenausrichtung (200) nach einem der Ansprüche 11 bis 13, wobei das Fördersystem ein Aufzugssystem (101) ist; wobei die Komponente optional eine Türverriegelungskomponente einer Türverriegelung (300) für eine Schachttür des Aufzugssystems (101) ist; und wobei das Kamerasystem ferner optional Folgendes umfasst:
eine erste Kamera (210a) an einem ersten Standort relativ zu der Türverriegelung (300); und
eine zweite Kamera (210b) an einem zweiten Standort relativ zu der Türverriegelung (300).

15. Computerprogrammprodukt, das physisch auf einem nichtflüchtigen computerlesbaren Medium umgesetzt ist, wobei das Computerprogrammprodukt Anweisungen beinhaltet, die beim Ausführen durch einen Prozessor den Prozessor zum Durchführen von Operationen veranlassen, umfassend:
Bestimmen eines Folgestandorts der Komponente unter Verwendung fotogrammetrischer Messungen eines durch ein Kamerasystem aufgenommenen Folgebildes;
**gekennzeichnet durch**:
Vergleichen des Folgestandorts mit einem Ausgangsstandort der Komponente; und
Bestimmen, ob sich die Komponente von dem Ausgangsstandort weg verschoben hat, auf der Grundlage des Folgestandorts und des Ausgangsstandorts.

## Revendications

1. Procédé (600) de surveillance d'un alignement d'un composant d'un système de transport (101), le procédé comprenant :
la capture (604), à l'aide d'un système de caméra (208), d'une image de suivi du composant du système de transport ;
la détermination (606) d'un emplacement de suivi du composant à l'aide de mesures photogrammétriques de l'image de suivi ;
**caractérisé par** :
la comparaison (608) de l'emplacement de suivi à un emplacement de ligne de base du composant ; et
la détermination (610) de si le composant s'est décalé en s'éloignant de l'emplacement de ligne base en fonction de l'emplacement de suivi et de l'emplacement de ligne de base.

2. Procédé (600) selon la revendication 1, comprenant également :
la capture, à l'aide du système de caméra (208), d'une image de ligne de base du composant du système de transport (101) ; et
la détermination d'un emplacement de ligne de base du composant à l'aide de mesures photogrammétriques de l'image de ligne de base.

3. Procédé (600) selon une quelconque revendication précédente, comprenant également :
la détermination de si un décalage en s'éloignant de l'emplacement de ligne base est supérieur à une valeur de variance acceptable qui indique qu'un désalignement angulaire ou un désalignement linéaire du composant est à l'extérieur d'une plage acceptable.

4. Procédé (600) selon la revendication 3, comprenant également :
l'activation d'une alerte sur un dispositif informatique (500) lorsque le désalignement angulaire ou le désalignement linéaire du composant est à l'extérieur de la plage acceptable.

5. Procédé (600) selon l'une quelconque des revendications 3 ou 4, comprenant également :
la création d'un nouvel événement de maintenance sur un calendrier lorsque le désalignement angulaire ou le désalignement linéaire du composant est à l'extérieur de la plage acceptable.

6. Procédé (600) selon l'une quelconque des revendications 3 à 5, comprenant également :
le déplacement d'un événement de maintenance précédemment planifié sur un calendrier lorsque le désalignement angulaire ou le désalignement linéaire du composant est à l'extérieur de la plage acceptable.

7. Procédé (600) selon une quelconque revendication précédente, dans lequel le système de transport est un système d'ascenseur (101).

8. Procédé (600) selon la revendication 7, dans lequel le composant est un composant de serrure de porte d'une serrure de porte (300) pour une porte palière du système d'ascenseur (101).

9. Procédé (600) selon la revendication 8, dans lequel le système de caméra (208) comprend également :
une première caméra (210a) à un premier emplacement par rapport à la serrure de porte (300) ; et
une seconde caméra (210b) à un second emplacement par rapport à la serrure de porte (300).

10. Procédé (600) selon la revendication 9, dans lequel la première caméra (210a) est située au-dessus de la serrure de porte (300) regardant vers le bas sur la serrure de porte (300), et dans lequel la seconde caméra (210b) est située sur un côté de la serrure de porte (300) regardant axialement vers le bas sur la serrure de porte (300).

11. Système de surveillance d'alignement de composant (200) pour surveiller un alignement d'un composant d'un système de transport, le système de surveillance d'alignement de composant comprenant :
un système de caméra (208) ;
un dispositif de commande (230) pour le système de caméra (208),
le dispositif de commande (230) comprenant :
un processeur (232) ; et
une mémoire (234) comprenant des instructions exécutables par ordinateur qui, lorsqu'elles sont exécutées par le processeur, amènent le processeur à mettre en œuvre des opérations, les opérations comprenant :
la détermination d'un emplacement de suivi du composant à l'aide de mesures photogrammétriques d'une image de suivi capturée à l'aide du système de caméra ;
**caractérisé par** :
la comparaison de l'emplacement de suivi à un emplacement de ligne de base du composant ; et
la détermination de si le composant s'est décalé en s'éloignant de l'emplacement de ligne base en fonction de l'emplacement de suivi et de l'emplacement de ligne de base.

12. Système de surveillance d'alignement de composant (200) selon la revendication 11, dans lequel les opérations comprennent également :
la détermination de l'emplacement de ligne de base du composant à l'aide de mesures photogrammétriques d'une image de ligne de base capturée par le système de caméra.

13. Système de surveillance d'alignement de composant (200) selon l'une quelconque des revendications 11 à 12, dans lequel les opérations comprennent également :
la détermination de si un décalage en s'éloignant de l'emplacement de ligne base est supérieur à une valeur de variance acceptable qui indique qu'un désalignement angulaire ou un désalignement linéaire du composant est à l'extérieur d'une plage acceptable ; éventuellement dans lequel les opérations comprennent également :
l'activation d'une alerte sur un dispositif informatique (500) lorsque le désalignement angulaire ou le désalignement linéaire du composant est à l'extérieur de la plage acceptable ; et/ou dans lequel les opérations comprennent également :
la création d'un nouvel événement de maintenance sur un calendrier lorsque le désalignement angulaire ou le désalignement linéaire du composant est à l'extérieur de la plage acceptable ; et/ou dans lequel les opérations comprennent également :
le déplacement d'un événement de maintenance précédemment planifié sur un calendrier lorsque le désalignement angulaire ou le désalignement linéaire du composant est à l'extérieur de la plage acceptable.

14. Système de surveillance d'alignement de composant (200) selon l'une quelconque des revendications 11 à 13, dans lequel le système de transport est un système d'ascenseur (101) ; éventuellement, dans lequel le composant est un composant de serrure de porte d'une serrure de porte (300) pour une porte palière du système d'ascenseur (101) ; et également éventuellement, dans lequel le système de caméra comprend également :
une première caméra (210a) à un premier emplacement par rapport à la serrure de porte (300) ; et
une seconde caméra (210b) à un second emplacement par rapport à la serrure de porte (300).

15. Produit programme d'ordinateur mis en œuvre de manière tangible sur un support non transitoire lisible par ordinateur, le produit programme d'ordinateur comportant des instructions qui, lorsqu'elles sont exécutées par un processeur, amènent le processeur à mettre en œuvre des opérations comprenant :
la détermination d'un emplacement de suivi du composant à l'aide de mesures photogrammétriques d'une image de suivi capturée par un système de caméra ;
**caractérisé par** :
la comparaison de l'emplacement de suivi à un emplacement de ligne de base du composant ; et
la détermination de si le composant s'est décalé en s'éloignant de l'emplacement de ligne base en fonction de l'emplacement de suivi et de l'emplacement de ligne de base.
